# EUROPEAN PATENT SPECIFICATION

(11) **EP 0 663 711 B1**
(45) Date of publication and mention of the grant of the patent: **06.05.1998**
(21) Application number: 95300071.8
(22) Date of filing: 06.01.1995
(51) Int. Cl.: H02G 15/04

(54) **Mineral insulated cable termination**
Mineralisolierter Kabelendverschluss
Terminaison de câble à isolation minérale

(30) Priority: 14.01.1994 GB 9400659
(43) Date of publication of application: 19.07.1995
(73) Proprietor: BICC Public Limited Company, London W1X 5FH (GB)
(72) Inventor: Muldoon, Alan Gerard, Rainhill, Merseyside L35 4PH (GB)
(74) Representative: Dlugosz, Anthony Charles

(56) References cited:
- EP-A- 0 476 909
- DE-A- 1 490 809

## Description

This invention relates to the termination of mineral insulated electric cables, that is to say cables of the kind comprising at least one conductor insulated from a surrounding metal sheath, and where there is more than one conductor from the other conductor or conductors, by compacted mineral insulating powder, usually but not necessarily magnesium oxide.

Compacted mineral insulating powder is particularly vulnerable to water penetration and it is the general practice to protect an end of a mineral insulated cable against the ingress of moisture by a metal sealing pot which is screwed or otherwise secured to the cable sheath and which is filled with waterproof sealing compound. Assembly of a sealing pot on an end of a mineral insulated electric cable in such a way as to provide an effective waterproof termination requires a degree of skill and the time taken to terminate mineral insulated electric cables of a mineral insulated electric cable installation contributes to a substantial proportion of the overall cost of the installation.

In order to simplify termination of such cables, it has been proposed, for example in European Patent Application No: 476,909, to use a tube of flexible electrically insulating material that is longitudinally slit into at least two opposed portions that can be brought together about the cable to enclose the end of the cable, and which has one end that is closed by an end wall, the end wall having one or more throughbores for allowing one or more conductors of the cable to extend through and beyond the termination. Such a termination provides a very simple and cost effective way of terminating a mineral insulated cable. However, we have found that it is possible for the cable termination to be incorrectly installed in such a way that the opposed portions are not brought together fully, thereby allowing ingress of moisture to the cable. DE-A-1490809 discloses a protective cable sleeve that is formed in two half-shells of glass-fibre reinforced polyester that can be positioned together about the cable, and which includes a pair of clamping rings that can be pushed over the ends of the assembled cable sleeve to clamp the half-shells together.

The ends of the cable sleeve are tapered so that when the clamping rings are pushed on, they grip the shells firmly by friction.

According to the present invention, there is provided a cable termination for a mineral insulated cable, which comprises a tube of electrically insulating material that is slit along its length at at least one position on its circumference to divide the tube into at least two opposed portions that can be positioned about a cut-back sheath of the cable and brought together to enclose the end region of the sheath, the tube having one end that is closed by an end wall that has one or more throughbores for allowing one or more conductors of the cable to extend through and beyond the termination, the termination including a collar that can be located about the tube when the opposed portions of the tube have been brought together, characterised in that:
(i) the tube is flexible;
(ii) the collar is adapted to be located about the tube only when the opposed portions of the tube have been brought together; and
(iii) when the collar has been located about the tube and the termination has been installed on the cable the collar is rotationally slidable about the tube.

The termination according to the present invention has the advantage that not only is it possible to ensure that the tube has been correctly closed when installing the termination so that once the termination has been installed the tube cannot accidentally be opened, but also the tube is protected against mechanical abuse.

Preferably the tube has a slit along its length at one position on its circumference, and at at least one other position on its circumference the tube wall can form a hinge to allow the opposed portions of the tube to be brought together. Such a form of tube may be formed in one piece so that it is easier to handle during installation.

The opposed sides of the slit are preferably so shaped that they will effect a snap-fit when they are brought together, in which case the collar advantageously has a lateral dimension such that it can be located about the tube only when the opposed sides of the slit have been brought together to effect a snap-fit, thereby ensuring that the slit tube is correctly closed. However, in view of the fact that the collar will prevent accidental opening of the tube, it is not essential for any closure means to be provided on the tube itself, and it is possible for this function to be provided by the collar.

The collar, according to the broadest aspect of the invention, is not restricted to any particular length. However, it is preferred for it to be in the form of a sleeve, especially one that extends axially over a major part of the length of the tube and most especially over substantially the entire length of the tube (excluding any extensions to the through - bores thereof) in order to protect the tube against any mechanical abuse. In this respect the collar is rotationally slidable about the tube when the termination has been installed on a cable. In addition, the termination preferably includes means for preventing or limiting sliding of the collar on the tube in an axial direction when it is located about the tube. Thus, for example, the collar may extend axially over the entire length of the tube except for an end region of short axial dimension at each end of the tube, each end region of the tube having a slightly greater lateral dimension than the central region thereof and thereby forming a stop to limit axial movement of the collar. In such a case one or both end regions may have a bevelled or sloping surface that assists sliding of the collar on to the tube.

One form of termination according to the invention will now be described by way of example in which:
Figure 1 is a plan view of the tube of the termination device according to the invention;
Figures 2 and 3 are end views of the tube of figure 1 in the direction of arrows I and II;
Figure 4 is a sectional side view of the end part of a mineral insulated cable terminated according to the invention; and
Figure 5 is an end view of the terminated cable shown in the direction of arrow II.

Referring to the accompanying drawings, a mineral insulated cable terminating device comprises a tube 21 of electrically insulating plastics material which at one end has an end wall 22 having a centrally disposed throughbore 24 of a diameter such that the tube will effect a tight fit over the cut-back sheath of a mineral insulated electric cable and which at the other end has an end wall 23 having three throughbores 26 for passage of conductors of the cable and, extending outwardly from the end wall 3, three sleeves 27 in axial alignment with the throughbores. At a first position 29 around the circumferential wall 28 of the tube 21, the wall is slit throughout its length and radial thickness so that the tube consists of two hinged parts 21', 21", and, at two circumferentially spaced positions around the circumferential wall, the circumferential wall is of such a transverse cross-sectional shape and radial thickness that the wall at these positions effectively constitutes hinges 30. The end wall 23 is slit transversely over a part 32 of its width extending from the first position 29 along its diameter and over the majority of the remainder of its width along two substantially parallel planes 33 on opposite sides of the axis of the end wall dividing the end wall into a central portion 23' and two other portions 23 '' of the end wall.

One of the two abutting parts of the circumferential wall 28 of the tube 21 at the first position 29 has extending throughout its length an outwardly extending protruberance 34 which will effect a snap fit in a groove 35 of complementary cross-sectional shape extending longitudinally throughout the length of the inner surface of the other part. The portion 22'' of the end wall 22 integral with each hinged part 21', 21'' of the tube 21 has between its inner and outer end faces a recess 36 of substantially arcuate shape and that part of the circumferential wall 28 integral with the central portion 22' of the end wall 22 has therein and protruding inwardly therefrom a metal clip 37 of substantially C-shape, the limbs of the C-shaped clip being so spaced apart that, when the tube is fitted over the cut-back sheath of a cable, they will mechanically engage with and secure the tube to the cut-back sheath to restrain the tube against removal of the cable.

In each hinged part 21', 21'' of the tube 21, the portions of the end walls 22, 23 and the circumferential wall 28 bound a well 38 and the well of one of the hinged parts of the tube may be pre-filled with waterproof electrically insulating compound of a grease-like nature (not shown).

Along a transversely extending line interconnecting the diametrically extending slit in the end wall 23 and the parallel slits therein the end wall has a step 25 intermediate of its inner and outer end surfaces so that parts of the portion 23" of the end wall will overlie a part of the central portion 23' of the end wall when the hinged parts 21', 21" are closed together.

The outwardly directed surface of the tube 21 has a circumferentially extending raised portion 40 at one end and at the other end has a protuberance 41, 41' on the outer surface of each of the hinged parts. Each protuberance 41, 41' extends a short distance circumferentially around the tube and has a bevelled surface on the side adjacent to the end of the tube.

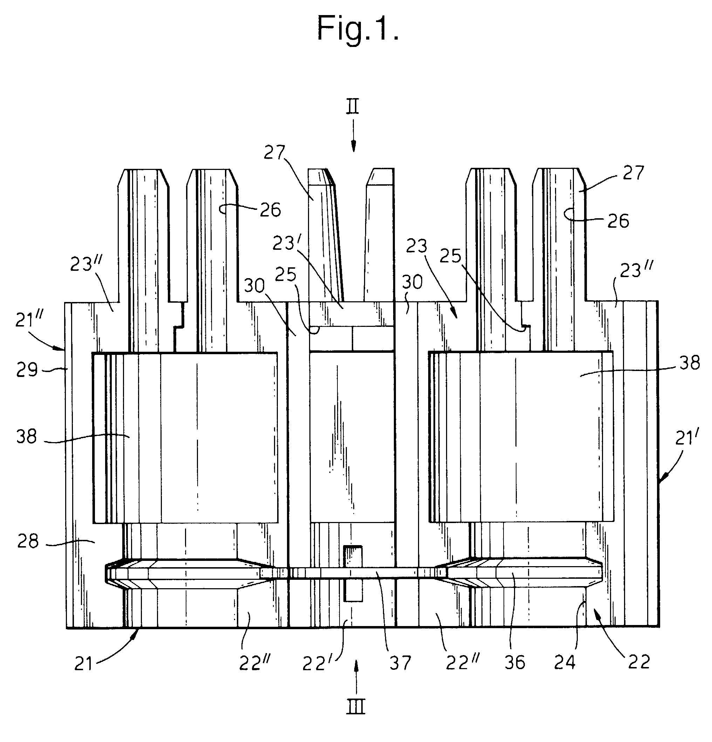

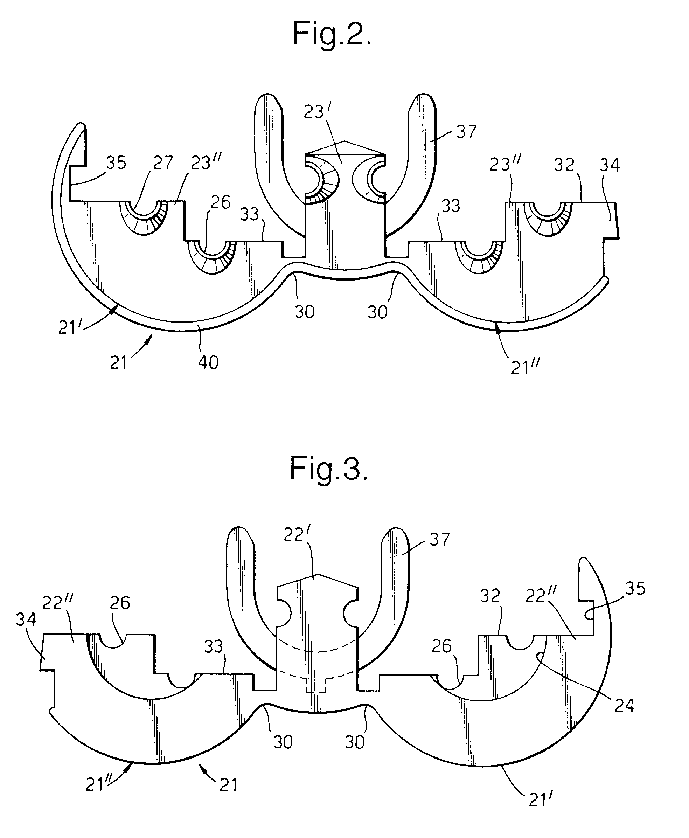

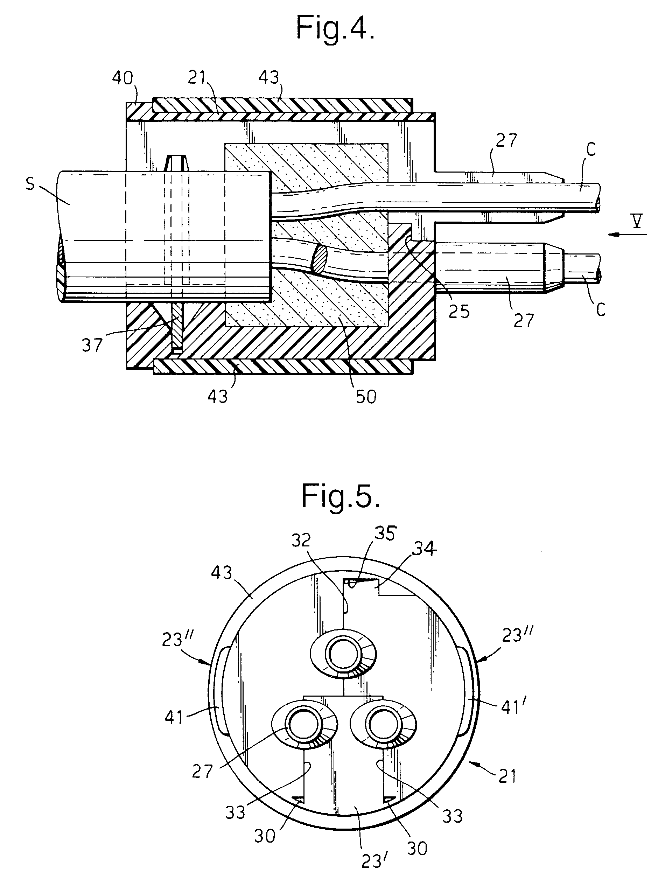

when using the mineral insulated cable terminating device shown in figures 1 to 3 to assemble the mineral insulated cable termination shown in figures 4 and 5, if the well 38 of one of the hinged parts 21', 21" of the tube 21 has not been pre-filled with waterproof electrically insulating compound of a grease-like or putty-like nature, such a compound 50 is introduced into the well 38 of one of the hinged parts and the hinged parts of the tube are so applied to the cut-back end of a mineral insulted cable that the cut-back sheath of the cable is disposed between portions 22" of the end wall 22 and protrudes between the wells 38 and the conductors C of the cable are disposed in parts of the throughbores in the end wall 23 and sleeves 27 of the central portion 23' and one of the other portions 23" of the end wall. If desired the device may include a transversely extending datum line (not shown) against which the cut-back end of the cable sheath may be aligned in order to ensure correct positioning of the cable end in the wells 38. The hinged parts 21', 21" of the tube 21 are then closed so that the protuberance 34 effects a snap fit in the groove 35 and the end wall 22 effects a tight fit on the cut-back sheath S of the cable, the limbs of the C-shaped clip 37 mechanically engaging with and securing the tube to the sheath so as to restrain the tube against removal from the cable. Excess insulating compound 50 is squeezed out of the tube 21 between each conductor C and the surrounding boundary wall of the throughbore 26 through which the conductor passes.

A plastics sleeve 43 is then slipped on to the tube 21, over the protuberances 41, 41' until it is located between the protuberances 41, 41' and the end portion 40. The bevelled surfaces assist slipping on the sleeve 43 which can either expand slightly to ride over the protuberances or may be manually squeezed to deform it into a slightly elliptical shape to assist its location on the tube. When the sleeve 43 is located on the tube 21, the side surfaces of the raised portion 40 and the protuberances 41, 41' act as stops to prevent the sleeve sliding axially. The sleeve 43 is only slightly shorter in length than the axial distance between the raised portion 40 and the protuberances 41, 41' so that it extends over substantially the entire outer surface of the tube. The sleeve ensures that the protuberance 34 and groove 35 are correctly engaged and also the sleeve can rotate on the tube about the axis of the cable, in order to protect the tube from mechanical abuse.

## Claims

1. A cable termination for a mineral insulated cable, which comprises a tube (21) of electrically insulating material that is slit along its length at at least one position (29) on its circumference to divide the tube into at least two opposed portions (21', 21") that can be positioned about a cut-back sheath (S) of the cable and brought together to enclose the end region of the sheath, the tube having one end that is closed by an end wall (23) that has one or more throughbores (26) for allowing one or more conductors of the cable to extend through and beyond the termination, the termination including a collar (43) that can be located about the tube when the opposed portions of the tube have been brought together, characterised in that:
(i) the tube (21) is flexible;
(ii) the collar (43) is adapted to be located about the tube only when the opposed portions of the tube have been brought together; and
(iii) when the collar has been located about the tube and the termination has been installed on the cable the collar is rotationally slidable about the tube.

2. A termination as claimed in claim 1, wherein the end wall (23) of the tube has a plurality of throughbores (26) for allowing a plurality of conductors of the cable to extend through and beyond the termination.

3. A termination as claimed in claim 1 or claim 2, wherein the tube has a slit along its length at at least one position (29) on its circumference, and at at least another position on its circumference the tube wall can form a hinge (30) to allow the portions of the tube to be brought together.

4. A termination as claimed in claim 3, wherein longitudinally extending parts (34, 35) of the tube on opposed side of the slit are so shaped that they will effect a snap-fit when they are brought together.

5. A termination as claimed in claim 4 wherein the collar (43) has a lateral dimension such that it can be located about the tube only when the opposed sides of the slit have been brought together and a snap-fit effected.

6. A termination as claimed in any one of claims 1 to 5, wherein the collar (43) is in the form of a sleeve.

7. A termination as claimed in claim 5, wherein the sleeve extends (43) over substantially the entire length of the tube when it is located about the tube.

8. A termination as claimed in any of the claims 1 to 6, which includes means for preventing or limiting sliding of the collar on the tube in an axial direction when it is located about the tube.

9. A mineral insulated electric cable that has been terminated by means of a termination as claimed in any one of claims 1 to 8.

## Patentansprüche

1. Kabelendverschluß für ein mineralisoliertes Kabel mit einem Schlauch (21) aus elektrisch isolierendem Material, der seiner Länge nach an mindestens einer Position (29) an seinem Umfang geschlitzt ist, um den Schlauch in mindestens zwei gegenüberliegende Abschnitte (21', 21") aufzuteilen, die um einen zurückgeschnittenen Mantel (S) des Kabels positioniert und zusammengeführt werden können, um den Endbereich des Mantels zu umschließen, wobei der Schlauch ein Ende hat, das durch eine Endwand (23) verschlossen ist, die eine oder mehrere Durchgangsbohrungen (26) hat, damit ein oder mehrere Leiter des Kabels durch und über den Endverschluß hinaus verlaufen können, wobei der Endverschluß eine Manschette (43) aufweist, die um den Schlauch angeordnet werden kann, wenn die gegenüberliegenden Abschnitte des Schlauchs zusammengeführt wurden, dadurch gekennzeichnet, daß
(i) der Schlauch (21) flexibel ist;
(ii) die Manschette (43) geeignet ist, um den Schlauch nur dann angeordnet zu werden, wenn die gegenüberliegenden Abschnitte des Schlauchs zusammengeführt wurden; und
(iii) nach Anordnen der Manschette um den Schlauch und nach Installation des Endverschlusses an dem Kabel die Manschette drehend um den Schlauch gleiten kann.

2. Endverschluß nach Anspruch 1, wobei die Endwand (23) des Schlauchs mehrere Durchgangsbohrungen (26) hat, damit mehrere Leiter des Kabels durch und über den Endverschluß hinaus verlaufen können.

3. Endverschluß nach Anspruch 1 oder Anspruch 2, wobei der Schlauch seiner Länge nach an mindestens einer Position (29) an seinem Umfang einen Schlitz hat und an mindestens einer weiteren Position an seinem Umfang die Schlauchwand ein Scharnier (30) bilden kann, damit die Abschnitte des Schlauchs zusammengeführt werden können.

4. Endverschluß nach Anspruch 3, wobei längs verlaufende Teile (34, 35) des Schlauchs auf gegenüberliegenden Seiten des Schlitzes so geformt sind, daß sie einschnappen, wenn sie zusammengeführt werden.

5. Endverschluß nach Anspruch 4, wobei die Manschette (43) eine solche Seitenabmessung hat, daß sie nur dann um den Schlauch angeordnet werden kann, wenn die gegenüberliegenden Seiten des Schlitzes zusammengeführt wurden und eingeschnappt sind.

6. Endverschluß nach einem der Ansprüche 1 bis 5, wobei die Manschette (43) die Form einer Muffe hat.

7. Endverschluß nach Anspruch 5, wobei die Muffe (43) im wesentlichen über die Gesamtlänge des Schlauchs verläuft, wenn sie um den Schlauch angeordnet ist.

8. Endverschluß nach einem der Ansprüche 1 bis 6, der eine Einrichtung zum Verhindern oder Begrenzen eines Gleitens der Manschette an dem Schlauch in Axialrichtung aufweist, wenn sie um den Schlauch angeordnet ist.

9. Mineralisoliertes elektrisches Kabel, das durch einen Endverschluß nach einem der Ansprüche 1 bis 8 abgeschlossen wurde.

## Revendications

1. Terminaison de câble pour un câble à isolation minérale, qui comprend un tube (21) en une matière isolante de l'électricité, que l'on fend le long de sa longueur en au moins un endroit (29) sur sa circonférence pour diviser le tube en au moins deux parties opposées (21', 21") qui peuvent être positionnées autour d'une gaine raccourcie (S) du câble et assemblées pour enfermer la région d'extrémité de la gaine, le tube comportant une extrémité qui est fermée par une paroi d'extrémité (23) comportant un ou plusieurs trous traversants (26) pour permettre à un ou plusieurs conducteurs du câble de s'étendre à travers la terminaison et au-delà de celle-ci, la terminaison comprenant une bague (43) que l'on peut placer autour du tube quand les parties opposées du tube ont été assemblées l'une avec l'autre, caractérisé en ce que:
(i) le tube (21) est souple;
(ii) la bague (43) est adaptée pour être placée autour du tube seulement quand les parties opposées du tube ont été assemblées; et
(iii) quand la bague a été placée autour du tube et quand la terminaison a été installée sur le câble, la bague peut glisser de façon tournante autour du tube.

2. Terminaison selon la revendication 1, dans laquelle la paroi d'extrémité (23) du tube comporte une puralité de trous traversants (26) destinés à permettre à une pluralité de conducteurs du câble de s'étendre au-delà de la terminaison et au-delà de celle-ci.

3. Terminaison selon la revendication 1 ou la revendication 2, dans lequel le tube comporte une fente sur toute sa longueur en au moins un endroit (29) de sa circonférence, et en au moins un autre endroit sur sa circonférence la paroi du tube peut former une charnière (30) pour permettre aux parties du tube d'être assemblées l'une contre l'autre.

4. Terminaison selon la revendication 3, dans laquelle les parties (34, 35) du tube qui s'étendent dans la direction longitudinale de part et d'autre de la fente ont une forme telle qu'elles s'enclenchent mutuellement quand elles sont amenées l'une contre l'autre.

5. Terminaison selon la revendication 4, dans lequel la bague (43) présente une dimension latérale telle qu'elle peut être placée autour du tube seulement que lorsque les côtés opposés de la fente ont été amenés l'un contre l'autre et qu'un enclenchement a été effectué.

6. Terminaison selon l'une quelconque des revendications 1 à 5, dans laquelle la bague (43) se présente sous la forme d'un manchon.

7. Terminaison selon la revendication 5, dans laquelle le manchon(43) s'étend sensiblement sur toute la longueur du tube quand il se trouve autour du tube.

8. Terminaison selon l'une quelconque des revendications 1 à 6, qui comprend un moyen pour empêcher ou limiter le glissement de la bague sur le tube dans la direction axiale quand elle a été placée autour du tube.

9. Câble électrique à isolation minérale et dont l'extrémité comporte une terminaison selon l'une quelconque des revendications 1 à 8.
